# EUROPEAN PATENT APPLICATION

(11) **EP 1 793 378 A1**
(43) Date of publication of application: **06.06.2007**
(21) Application number: 06256027.1
(22) Date of filing: 24.11.2006
(51) Int. Cl.: G11B 17/04

(54) **Disc drive apparatus**

(30) Priority: 30.11.2005 JP 2005344849
(71) Applicant: ORION ELECTRIC CO., Ltd., Fukui 915-8555 (JP)
(72) Inventor: Makino, Takeshi c/o Orion Electric Co., Ltd., Echizen-city Fukui 915-8555 (JP)
(74) Representative: Paget, Hugh Charles Edward

(57) **Abstract**

The invention provides a disk device capable of reading, writing or reading and writing signals in a disk medium, having a mechanism for preventing the disk medium from falling into the depth direction of the device. By providing ribs 17 for preventing fall-in of the disk medium protruded toward the inner side of the device on the inner surfaces of both side walls of the frame 11 and positioned rearward than the center of the disk medium 2 with the distance between both ends of the ribs set to be smaller than at least the outer diameter of the disk medium 2, and formed so that it does not come into contact with the disk medium 2 when the disk medium is clamped by the clamp mechanism, the disk medium 2 is prevented from falling into the depth direction of the device by the ribs 17 for preventing fall-in of the disk medium.

## Description

### BACKGROUND OF THE INVENTION

### Field of the Invention

The present invention relates to a disk device for reading, writing or reading and writing signals on a disk medium, and more specifically, relates to a disk device capable of preventing the disk medium from falling into the depth direction of the device.

### Description of the Related Art

Disk media such as CDs and DVDs are used widely due to their superior usability, and various electronic devices using disk devices for recording and reproducing signals on the disk media are also widely used. One type of such various disk devices is a tray-type disk device in which the disk medium is usually simply placed on a disk tray when loading the disk medium into the disk device (without any special retention force applied for clamping the disk medium), so that if the disk device is installed in a slanted state, the disk medium may fall into the interior (depth direction) of the disk device.

If the disk medium falls into the interior of the device, problems may occur in that the disk medium cannot be taken out of the device, possibly causing malfunction of the device. Japanese Patent Application Laid-Open Publication No. 10-269670 (Patent document 1) discloses an art for preventing such problems (the disk medium from falling into the device).

If stoppers (projections) or the like for preventing the disk medium from falling into the device are provided on the disk tray, there are cases in which the "function of preventing the disk medium from falling into the device" is not sufficiently exerted due to limitations requiring the stoppers not to interfere with the sliding movement of the disk tray (requiring the stoppers (projections) to not interfere with the sliding movement of the frame or the like).

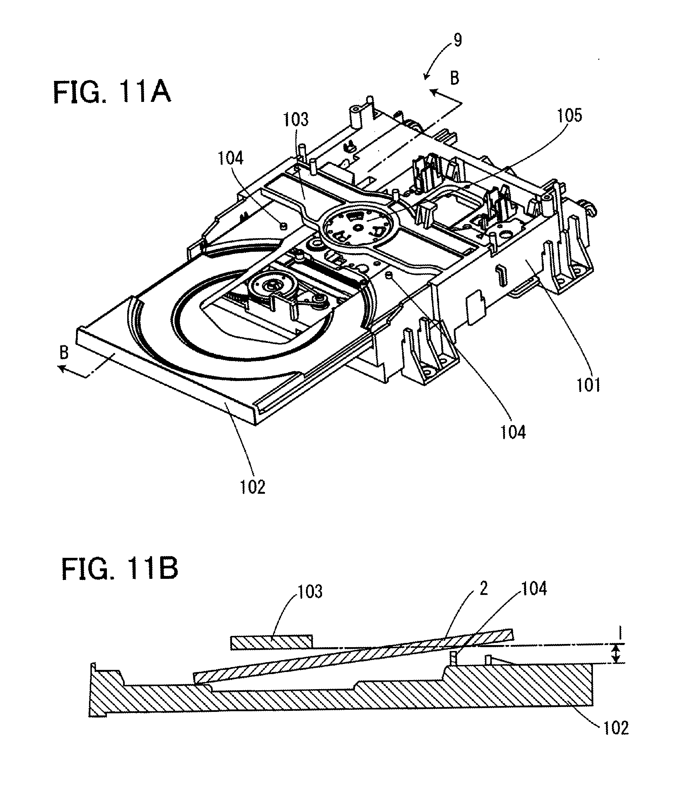

FIG. 11 shows a disk device 9 having stoppers (projections) 104 formed on the disk tray for preventing the disk medium from falling into the device. FIG. 11B is an explanatory view illustrating the state in which a disk medium 2 falls into the depth direction of the disk device 9, which is a conceptual cross-sectional view mainly showing the disk tray portion taken along line B-B of FIG. 11A (omitting unnecessary portions from the drawing for better understanding). As shown in the drawing, the stopper portions 104 must have a height "1" or smaller so as not to interfere with a beam portion 103 supporting a clamper 105 during the sliding motion of the disk tray 102, according to which, as shown in FIG. 11B, there are cases in which the "function of preventing the disk medium from falling into the device" is not sufficiently exerted (and the disk medium 2 may be displaced beyond the stopper portions 104). The illustrated example shows a disk device with an opened upper surface (according to which the above-mentioned problem is relatively significant), but the same problem may occur in a disk device having the upper side covered with a top panel.

### SUMMARY OF THE INVENTION

In consideration of the above problems, the present invention aims at providing a disk device for reading, writing, or reading and writing signals on a disk medium, capable of preventing the disk medium from falling into the depth direction of the device.

A first aspect of the present invention provides a disk device for reading, writing or reading and writing signals on a disk medium having ribs for preventing fall-in of the disk medium, comprising: a disk tray slidably disposed on a frame constituting an outer frame of the disk device for mounting the disk medium; and a clamp mechanism for clamping the disk medium; wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism.

According to the above arrangement, ribs for preventing fall-in of the disk medium are provided on inner surfaces of the two side walls of the frame, with the distance between the ends of the ribs being formed smaller than at least the outer diameter of the disk medium, so that the outer diameter of the disk medium is prevented from falling into the depth direction of the device beyond the straight line connecting the ribs. The "depth direction of the device" refers to the direction substantially equal to the direction in which the disk tray is moved in sliding motion, wherein the side of the frame on which the loading slot for loading and ejecting the disk tray is formed is referred to as the "front side", and the side toward which the disk tray is loaded is referred to as the "depth side".

A second aspect of the prevent invention provides a disk device having ribs for preventing fall-in of the disk medium according to aspect 1, wherein with respect to the height-direction size of the disk device, the ribs for preventing fall-in of the disk medium are formed so that lower ends of the ribs for preventing fall-in of the disk medium are positioned substantially equal to or lower than a lower surface of the disk medium mounted on the disk tray, and the upper ends of the ribs for preventing fall-in of the disk medium are positioned substantially equal to the upper end portion of the side walls of the frame.

According to the above arrangement, the height-direction size of the ribs for preventing fall-in of the disk medium (height direction of the disk device) corresponds to the distance from the lower surface of the disk medium mounted on the disk tray to the upper end of the side wall of the frame, so that even if the disk medium moves up and down within the frame, the medium moving toward the depth direction of the device will come into contact with the ribs preventing fall-in of the disk medium. Here, the "height direction of the device" refers to the perpendicular direction of the disk device installed in a so-called transverse position, which corresponds to the direction orthogonal to the plane of the disk medium loaded in the device.

A third aspect of the present invention provides a disk device for reading, writing or reading and writing signals on a disk medium having ribs for preventing fall-in of the disk medium, comprising: a disk tray slidably disposed on a frame constituting an outer frame of the disk device and having a disk mounting recess for mounting the disk medium; and a clamp mechanism for clamping the disk medium; wherein at least the width-direction size of the disk mounting recess is formed smaller than the outer diameter of the disk medium so that a portion of the disk medium protrudes from the disk mounting recess, and wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism.

According to the above arrangement, a portion of the disk medium protrudes from the disk mounting recess in the disk device having ribs for preventing fall-in of the disk medium.

A fourth aspect of the present invention provides a disk device having ribs for preventing fall-in of the disk medium according to aspect 3, wherein the ribs for preventing fall-in of the disk medium are formed at an area near the portion of the disk medium protruded from the disk mounting recess when the disk medium is clamped by the clamp mechanism, and with respect to the height-direction size of the disk device, the ribs for preventing fall-in of the disk medium are formed so that lower ends of the ribs are positioned substantially equal to or lower than a lower surface of the disk medium mounted on the disk mounting recess, and the upper ends of the ribs for preventing fall-in of the disk medium are positioned substantially equal to the upper end portion of the side walls of the frame.

According to the above arrangement, the ribs for preventing fall-in of the disk medium are formed in the area near the disk medium loaded in the device (being clamped by the clamp mechanism), so that if the disk medium moves toward the depth direction of the device from the loaded position, the medium immediately comes into contact with the ribs for preventing fall-in of the disk medium. Furthermore, since the height-direction size of the ribs for preventing fall-in of the disk medium (the height direction in the disk device) corresponds to the distance from the lower surface of the disk medium mounted on the disk mounting recess to the upper end of the side walls of the frame, even if the disk medium moves up and down within the frame, the disk medium will come into contact with the ribs for preventing fall-in of the disk medium when it moves toward the depth direction of the device.

A fifth aspect of the present invention provides a disk device having ribs for preventing fall-in of the disk medium according to any one of aspects 1 through 4, wherein the ribs for preventing fall-in of the disk medium are formed so that the upper ends thereof are placed deeper toward the depth direction of the disk device than the lower ends thereof, so that the ribs are slanted with respect to the vertical direction of the disk device.

According to the above arrangement, the ribs for preventing fall-in of the disk medium are formed in a slanted arrangement with the upper ends placed deeper toward the depth direction of the disk device than the lower ends thereof, so as to exert an effect to move the disk medium coming into contact therewith toward the front direction of the disk device. The "vertical direction" refers to the perpendicular direction when the disk device is installed in a so-called transverse position, which corresponds to the direction orthogonal to the plane of the disk medium loaded in the device.

A sixth aspect of the present invention provides a disk device having ribs for preventing fall-in of the disk medium according to any one of aspects 1 through 5, wherein the ribs for preventing fall-in of the disk medium are formed integrally with guide ribs formed on the inner surfaces of both side walls of the frame for restricting the sliding direction of the disk tray.

According to the above arrangement, it becomes possible to form the guide ribs provided on the inner surfaces of both side walls of the frame so as to restrict the sliding direction of the disk tray integrally with the ribs for preventing fall-in of the disk medium.

According to the first aspect of the present invention providing a disk device for reading, writing or reading and writing signals on a disk medium having ribs for preventing fall-in of the disk medium, comprising a disk tray slidably disposed on a frame constituting an outer frame of the disk device for mounting the disk medium, and a clamp mechanism for clamping the disk medium, wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism. Ribs for preventing fall-in of the disk medium are formed on inner surfaces of both side walls of the frame, with the distance between the ends of the ribs formed to be smaller than at least the outer diameter of the disk medium, so that the disk medium is prevented from moving beyond the straight line connecting the ribs and falling into the depth direction of the device (that is, the disk medium is prevented from falling into the interior (depth direction) of the device).

According to the second aspect of the present invention providing a disk device having ribs for preventing fall-in of the disk medium according to aspect 1, wherein with respect to the height-direction size of the disk device, the ribs for preventing fall-in of the disk medium are formed so that lower ends of the ribs for preventing fall-in of the disk medium are positioned substantially equal to or lower than a lower surface of the disk medium mounted on the disk tray, and the upper ends of the ribs for preventing fall-in of the disk medium are positioned substantially equal to the upper end portion of the side walls of the frame. The height of the ribs for preventing fall-in of the disk medium (height direction in the disk device) is equal to the distance from the lower surface of the disk medium mounted on the disk tray to the upper end of the side walls of the frame, so that even when the disk medium moves up and down within the frame, the disk medium moving toward the direction to fall into the depth direction of the device comes into contact with the ribs for preventing fall-in of the disk medium, by which the disk medium is effectively prevented from falling into the device.

According to the third aspect of the present invention providing a disk device for reading, writing or reading and writing signals on a disk medium having ribs for preventing fall-in of the disk medium, comprising a disk tray slidably disposed on a frame constituting an outer frame of the disk device and having a disk mounting recess for mounting the disk medium, and a clamp mechanism for clamping the disk medium, wherein at least the width-direction size of the disk mounting recess is formed smaller than the outer diameter of the disk medium so that a portion of the disk medium protrudes from the disk mounting recess, and wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism. Since a portion of the disk medium is protruded from the disk mounting recess, the disk medium is effectively prevented from falling into the interior of the device by forming the "ribs for preventing fall-in of the disk medium" so that the protruded portion contacts the "ribs for preventing fall-in of the disk medium".

According to the fourth aspect of the present invention providing a disk device having ribs for preventing fall-in of the disk medium according to aspect 3, wherein the ribs for preventing fall-in of the disk medium are formed at an area near the portion of the disk medium protruded from the disk mounting recess when the disk medium is clamped by the clamp mechanism, and with respect to the height-direction size of the disk device, the ribs for preventing fall-in of the disk medium are formed so that lower ends of the ribs are positioned substantially equal to or lower than a lower surface of the disk medium mounted on the disk mounting recess, and the upper ends of the ribs for preventing fall-in of the disk medium are positioned substantially equal to the upper end portion of the side walls of the frame. The ribs for preventing fall-in of the disk medium are formed near the disk medium loaded in the device, so that when the disk medium moves from the loaded position toward the depth direction of the device, the medium will immediately come into contact with the ribs for preventing fall-in of the disk medium, so that the disk medium is effectively prevented from falling into the interior (depth direction) of the device.

According to the fifth aspect of the present invention providing a disk device having ribs for preventing fall-in of the disk medium according to any one of aspects 1 through 4, wherein the ribs for preventing fall-in of the disk medium are formed so that the upper ends thereof are placed deeper toward the depth direction of the disk device than the lower ends thereof, so that the ribs are slanted with respect to the vertical direction of the disk device. The ribs for preventing fall-in of the disk medium are formed so that the upper ends thereof are placed deeper toward the depth direction of the disk device than the lower ends thereof, so that the ribs are slanted with respect to the vertical direction of the disk device, according to which the ribs coming into contact with the disk medium exert an effect to move the disk medium toward the front direction of the disk device, so that it becomes possible to lead the disk medium to the determined disk mounting position on the disk tray by the ribs for preventing fall-in of the disk medium.

According to the sixth aspect providing a disk device having ribs for preventing fall-in of the disk medium according to any one of aspects 1 through 5, wherein the ribs for preventing fall-in of the disk medium are formed integrally with guide ribs formed on the inner surfaces of both side walls of the frame for restricting the sliding direction of the disk tray. The guide ribs disposed on the inner sides of both side walls of the frame for restricting the sliding direction of the disk tray are formed integrally with the ribs for preventing fall-in of the disk medium, so that the number of components constituting the device can be reduced.

### BRIEF DESCRIPTION OF THE DRAWINGS

FIG. 1 is a perspective view showing the outline of the disk device, wherein FIG. 1A is a perspective view, and FIG. 1B is a perspective view with the top panel member removed;
FIG. 2 is a plan view showing the disk device with the top panel member removed;
FIG. 3 is a perspective view showing the frame constituting the disk device;
FIG. 4 is a view showing the disk tray, wherein FIG. 4A is a perspective view, and FIG. 4B is a perspective showing the state where the disk medium is mounted;
FIG. 5 is a view showing the disk tray, wherein FIG. 5A is a plan view, FIG. 5B is a side view, and FIG. 5C is a bottom view;
FIG. 6 is a conceptual cross-sectional view taken along line A-A of FIG. 2;

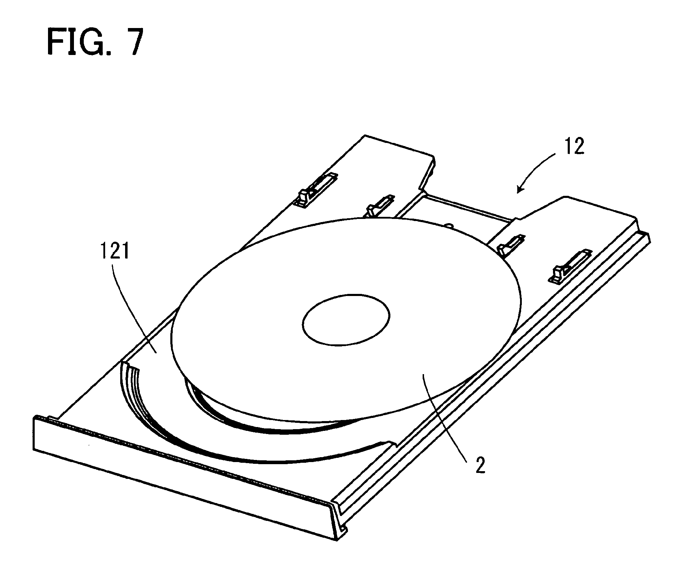

FIG. 7 is a view showing the state in which the disk medium is displaced on the disk tray;
FIG. 8 is a conceptual cross-sectional view of another disk device;
FIG. 9 is a perspective view showing the frame on which are formed another type of ribs for preventing fall-in of the disk medium;
FIG. 10 is a plan view showing another type of disk device with the top panel member removed; and
FIG. 11 is a view showing the disk device having a stopper for preventing fall-in of the disk medium formed on the disk tray, wherein FIG. 11A is a perspective view, and FIG. 11B is a conceptual cross-sectional view taken along line B-B of FIG. 11A.

### DETAILED DESCRIPTION OF THE PREFERRED EMBODIMENTS

Now, the preferred embodiments for carrying out the present invention will be described with reference to the drawings. The following embodiments are mere examples for realizing the present invention, and are not intended to restrict the scope of the present invention.

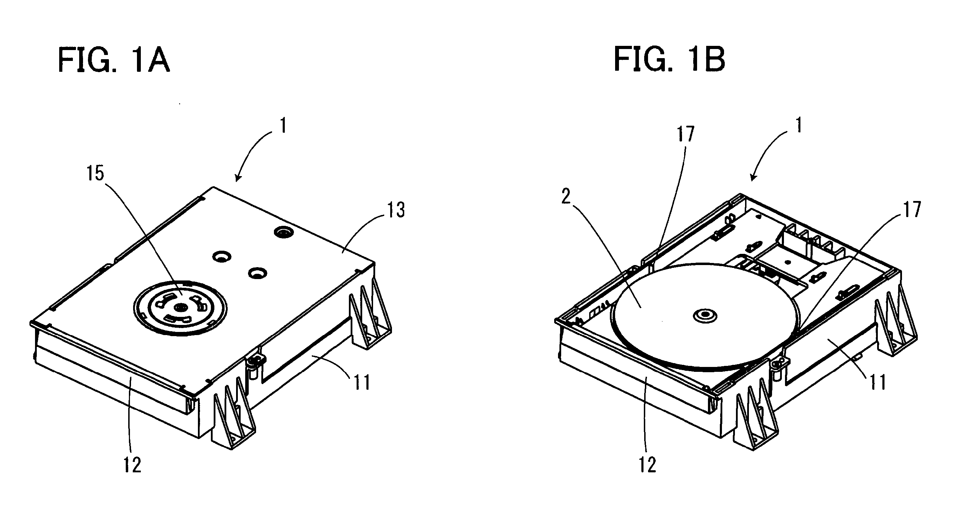

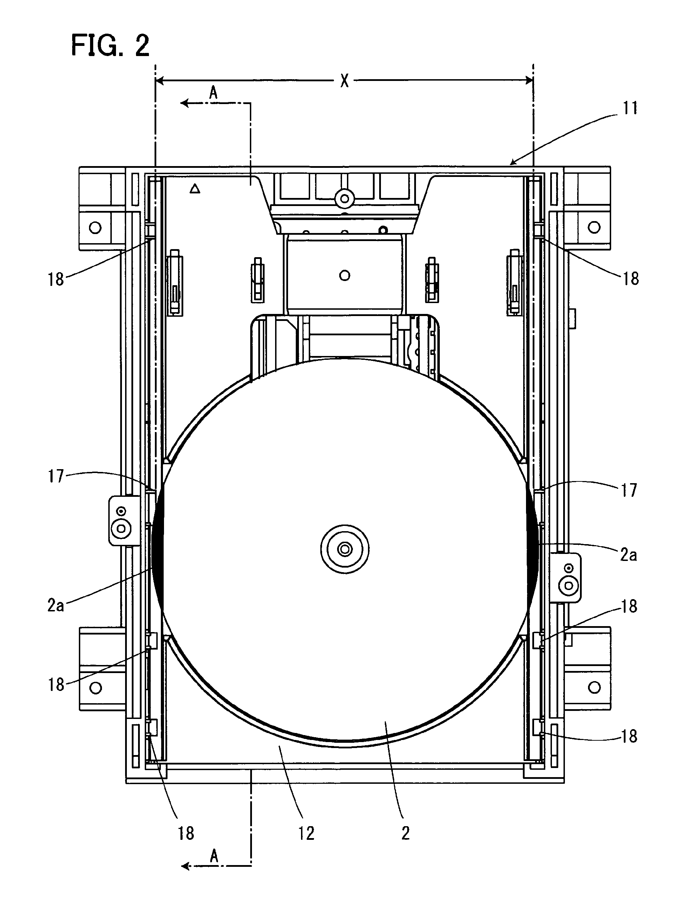

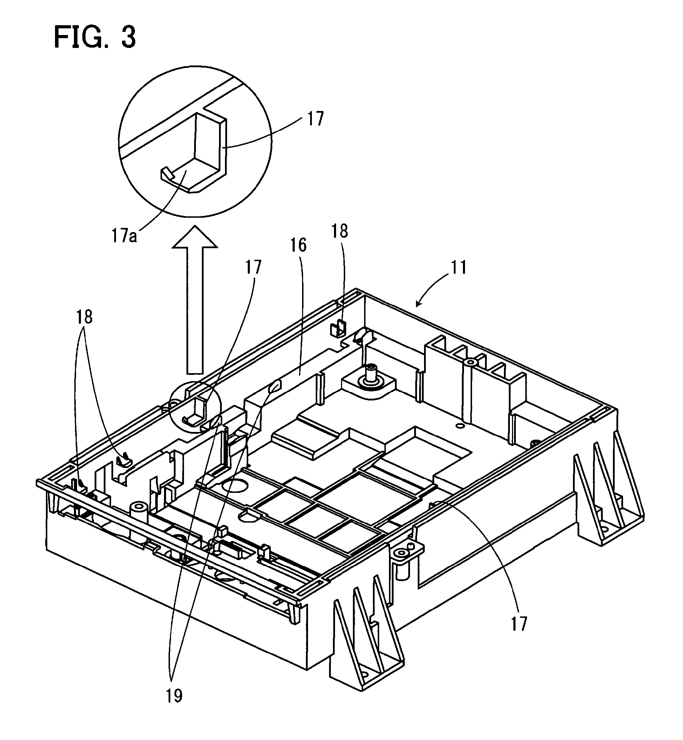

FIG. 1 is a view showing the disk device according to the present embodiment, wherein FIG. 1A is a schematic perspective view of the disk device, and FIG. 1B is a perspective view showing the outline of the disk device with the top panel removed. FIG. 2 is an upper view of the same disk device with the top panel removed, and FIG. 3 is a perspective view showing the outline of the frame constituting the disk device.

The disk device 1 is composed of a frame 11 formed mainly of resin and constituting the outer frame of the disk device, a disk tray 12 disposed slidably with respect to the frame 11, a clamper 15 for clamping the disk medium 2, and a top panel member 13 for holding the clamper 15 and covering the upper surface portion of the disk device 1. Further, although not shown, the disk device 1 comprises a pickup unit mounted in the frame 11, a pickup unit driving mechanism for moving the pickup unit along the radial direction of the disk medium 2, a turntable for clamping the disk medium with the clamper 15, and a spindle motor for rotating the turntable. A plurality of guide ribs 18 are formed on the inner side of the side walls of the frame 11 for restricting the sliding direction of the disk tray 12.

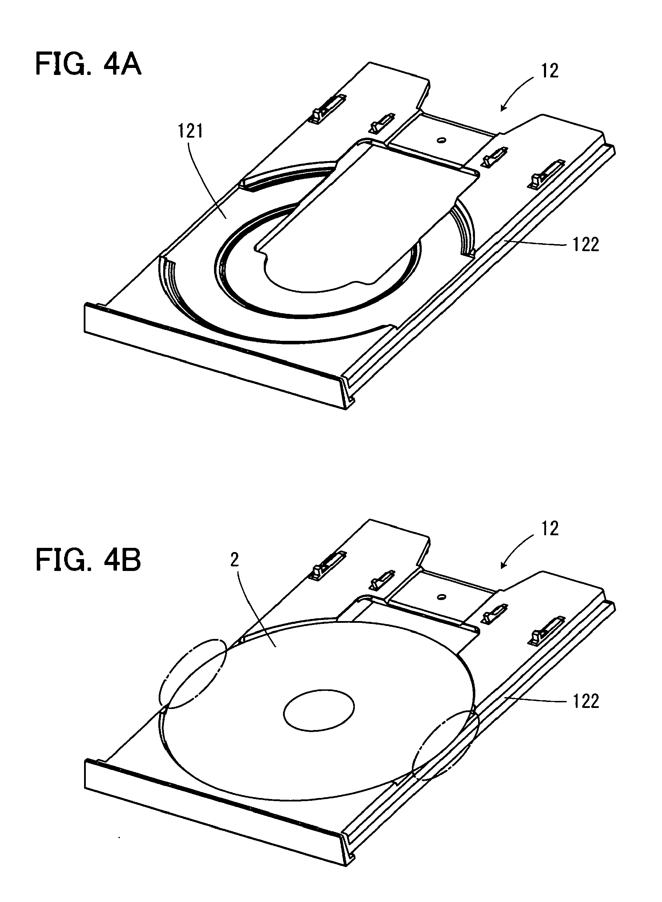

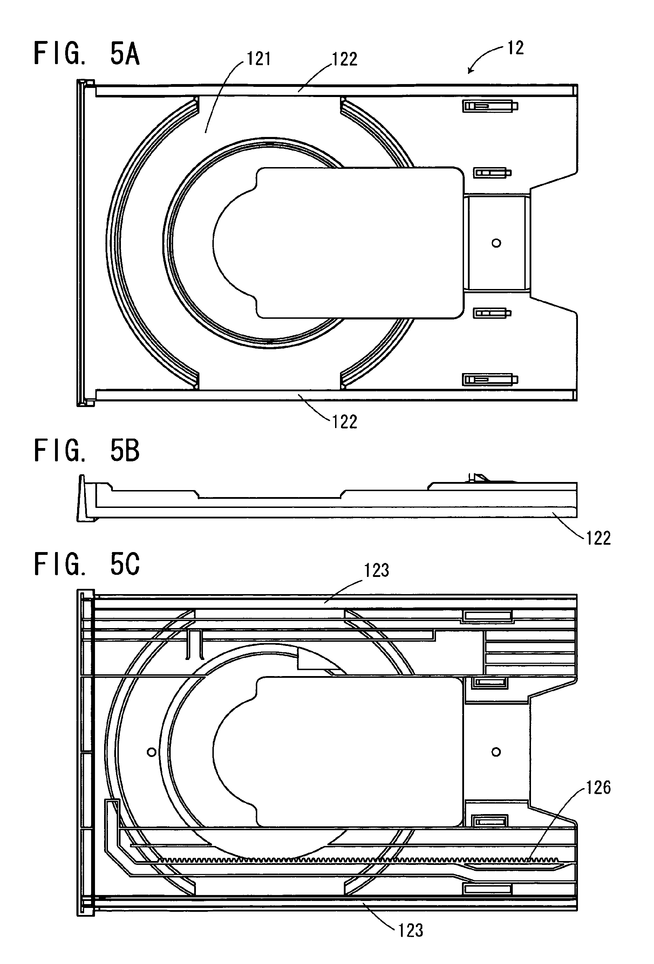

FIGS. 4 and 5 are views showing the disk tray 12. On the upper side of the disk tray 12 is formed a disk mounting recess 121 for mounting the disk medium 2. Furthermore, stepped rail portions 122 are formed on both side surfaces of the disk tray 12 so as to guide the disk tray 12 in sliding motion in the frame 11, having grooves 123 for guiding the disk tray 12 in sliding motion with respect to the frame 11 formed on the rear side of the stepped rail portions 122. By fitting the grooves 123 loosely to projections 19 (FIG. 3) formed on the frame 11, with the stepped rail portions 122 placed under the guide ribs 18 (with the stepped rail portions 122 mounted on stepped portions 16 on which the projections 19 are formed), the disk tray 12 can be slidably attached to the frame 11. (Detailed descriptions are omitted since they are not relevant to the present invention, but in practice, other mechanisms are assembled to the device, such as a tray rack 126 formed on the rear side of the disk tray 12 engaged with a gear for moving the disk tray 12 back and forth.)

The width-direction size of the disk tray 12 excluding the stepped rail portions 122 is formed smaller than the diameter of the disk medium 2, so that as shown in FIG. 4B, when the disk medium 2 is mounted on the disk tray 12, portions of the disk medium 2 are protruded from the outer contour of the disk tray 12 (which is the area surrounded by the dashed lines of FIG. 4B, corresponding to the black colored areas 2a of FIG. 2).

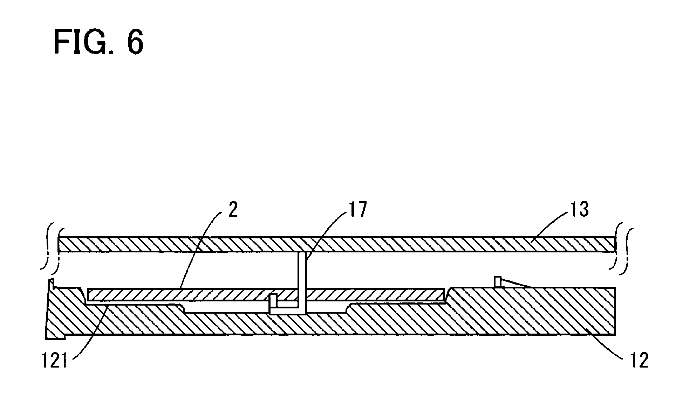

As shown in FIGS. 2 and 3, ribs 17 for preventing fall-in of the disk medium that prevent the disk medium 2 from falling into the interior of the disk device 1 are formed on the inner sides of the side walls of the frame 11. As shown in FIG. 2, ribs 17 for preventing fall-in of the disk medium are formed so that the distance between the ribs 17 (distance x of FIG. 2) formed on both side walls of the frame 11 is smaller than the outer radius of the disk medium 2 at the areas close to the portions where the disk medium 2 is protruded from the outer contours of the disk tray 12 (the black colored areas 2a). Furthermore, as shown in FIGS. 3 and 6 (which is a conceptual cross-sectional view taken along line A-A of FIG. 2, having the irrelevant portions excluded from the drawing for better understanding, and illustrating the ribs 17 for preventing fall-in of the disk medium in a somewhat magnified state), the ribs 17 for preventing fall-in of the disk medium are formed so that the upper end thereof corresponds to the upper end of the frame 11, and the lower end of the ribs 17 for preventing fall-in of the disk medium is positioned substantially at the same height as or lower than the lower surface of the disk medium 2 mounted on the disk mounting recess 121.

The ribs 17 for preventing fall-in of the disk medium also function as guide ribs by being formed integrally with the ribs 17a (FIG. 3).

According to the disk device 1 having the above arrangement, and as shown in FIG. 2, the distance between the ribs 17 for preventing fall-in of the disk medium (distance x in the drawing) is formed smaller than the outer diameter of the disk medium 2, so that the disk medium is prevented from falling into the inner side (depth direction) of the device. Moreover, as shown in FIG. 6, since the height of the ribs 17 for preventing fall-in of the disk medium corresponds to the length from the lower surface of the disk medium 2 being mounted on the disk mounting recess 121 to the upper end of the side wall of the frame 11 (in other words, the lower surface of the top panel member 13), even when the disk medium 2 moves up and down within the frame 11, the disk medium 2 moving toward the depth direction of the device (right direction in FIG. 6) comes into contact with the ribs 17 for preventing fall-in of the disk medium as long as the disk medium is not deformed or crashed, so the ribs can effectively prevent the disk medium 2 from falling into the device (that is, the disk medium will not fall into the interior of the device by moving beyond the "stopper preventing the disk medium from falling into the device" in the example illustrated in FIG. 11).

Furthermore, according to the disk device 1 of the present embodiment, even if the disk tray 12 is loaded into the device with the disk medium 2 displaced from the disk mounting recess 121, the disk medium 2 will come into contact with the ribs 17 for preventing fall-in of the disk medium as the disk tray 12 moves into the device, by which the ribs exert another effect of correcting the displacement of the disk medium 2.

Moreover, since there are a number of conventional disk trays 12 that are designed so that "portions of the disk medium 2 are projected from the disk mounting recess 121 when the disk medium 2 is mounted on the disk tray 12 (the areas corresponding to the black colored areas 2a of FIG. 2)" (considering the convenience of the user picking up the disk medium 2 with his/her hands, or the downsizing of width of the disk tray 12 (leading to the downsizing of the whole disk device 1)), the conventional disk tray 12 can be utilized as it is for the present invention, and there is no need to increase the number of components or the number of operation steps for adopting the present invention, according to which the disk device having applied the present invention can be manufactured at low costs.

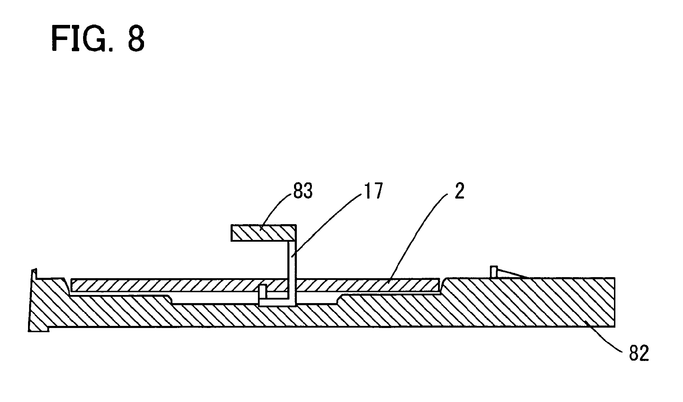

In addition, a disk device having the upper surface covered with a top panel member 13 is used as an example according to the present embodiment, but the present invention can also be applied effectively to a disk device with large opening areas formed on the upper surface as illustrated in FIG. 11. In this case, as shown in the conceptual cross-sectional view of FIG. 8, by forming ribs 17 for preventing fall-in of the disk medium directly below or close to a beam 83 supporting the clamper, it becomes possible to effectively prevent the disk medium 2 from falling into the device.

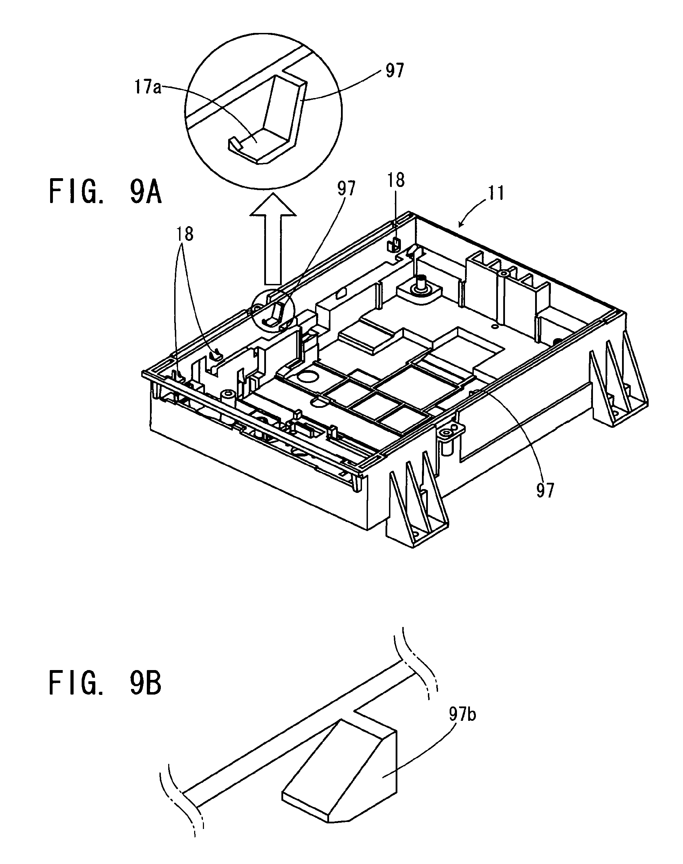

FIG. 9A illustrates a frame 11 to which are formed ribs 97 for preventing fall-in of the disk medium, which are designed to be slanted with respect to the vertical direction by forming the upper end of the ribs deeper toward the depth direction of the disk device than the lower end thereof. By forming the ribs 97 for preventing fall-in of the disk medium to have such shape, it becomes possible to guide the disk medium 2 coming into contact with the ribs toward the frontward direction of the disk device, according to which it becomes possible to exert an effect of guiding the disk medium 2 moving toward the direction to fall into the depth direction of the disk device to the frontward direction and into the predetermined disk mounting position on the disk tray 12 (within the disk mounting recess 121). Further, the ribs for preventing fall-in of the disk medium can be designed as shown in FIG. 9B (ribs 97b for preventing fall-in of the disk medium) considering the releasing of the frame 11 from the mold in the actual manufacturing process (which is formed with a similar concept).

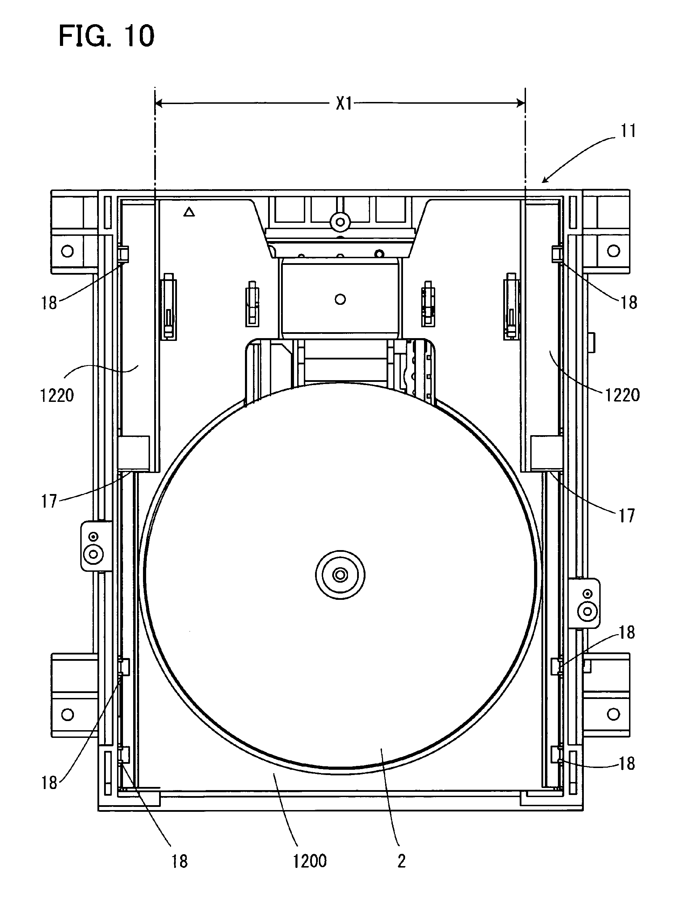

According to the present embodiment, one example has been mainly described in detail in which "portions of the disk medium 2 are projected from the disk mounting recess 121 when the disk medium 2 is mounted on the disk tray 12", but the present invention is not restricted thereto, and the present invention can be effectively applied to cases in which portions of the disk medium 2 are not projected from the disk mounting recess. For example, as shown in FIG. 10, it becomes possible to prevent the disk medium 2 from falling into the device by designing the width of a portion of a disk tray 1200 (distance x1 of FIG. 10) to be smaller than the outer diameter of the disk medium 2 (or forming a portion of stepped rail portions 1220 to be wider in width), and forming the distance between the ends of the ribs 17 for preventing the fall-in of the disk medium to be smaller than the outer diameter of the disk medium 2.

Furthermore, in FIG. 10, a portion of the stepped rail portions 1220 is formed to have a wider width so that the lower end of the ribs 17 for preventing fall-in of the disk medium can be formed lower than the upper surface portion of the disk tray 1200 (in other words, the lower surface of the disk medium 2 placed on the disk tray 1200), but if the disk tray 102 has stoppers (projections) 104 formed thereon as shown in FIG. 11, the lower surface of the disk medium 2 placed on the disk tray 102 is placed higher than the upper surface of the disk tray 102 near the stoppers 104 corresponding to the height of the stoppers 104, so that even if the lower end of the ribs 17 for preventing fall-in of the disk medium is higher than the upper surface of the disk tray, it can still be placed lower than the "lower surface of the disk medium 2 placed on the disk tray 102", and in that case (even if there are no projections especially provided to prevent the disk medium 2 from falling into the device, any type of protrusion formed on the disk tray can be utilized), the disk medium 2 can be effectively prevented from falling into the device even if portions of the disk tray are not cut off (if portions of the stepped rail portions 1220 are not formed to have wider width). Furthermore, even if the lower ends of the ribs 17 for preventing fall-in of the disk medium is placed above the upper surface of the disk tray, the disk medium 2 can be prevented from falling into the device as long as the space between the lower end of the ribs 17 and the upper surface of the tray is smaller than the thickness of the disk medium 2, so in that case, even without the stopper 104, portions of the disk tray are not required to be cut off.

According to the present embodiment, each one of the ribs 17 for preventing fall-in of the disk medium is formed respectively on one side wall of the frame 11, but plural ribs can be formed on each side wall.

## Claims

1. A disk device for reading, writing or reading and writing signals on a disk medium having ribs for preventing fall-in of the disk medium, comprising: a disk tray slidably disposed on a frame constituting an outer frame of the disk device for mounting the disk medium; and a clamp mechanism for clamping the disk medium; wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism.

2. The disk device having ribs for preventing fall-in of the disk medium according to claim 1, wherein with respect to the height-direction size of the disk device, the ribs for preventing fall-in of the disk medium are formed so that lower ends of the ribs for preventing fall-in of the disk medium are positioned substantially equal to or lower than a lower surface of the disk medium mounted on the disk tray, and the upper ends of the ribs for preventing fall-in of the disk medium are positioned substantially equal to the upper end portion of the side walls of the frame.

3. A disk device for reading, writing or reading and writing signals on a disk medium having ribs for preventing fall-in of the disk medium, comprising: a disk tray slidably disposed on a frame constituting an outer frame of the disk device and having a disk mounting recess for mounting the disk medium; and a clamp mechanism for clamping the disk medium; wherein at least the width-direction size of the disk mounting recess is formed smaller than the outer diameter of the disk medium so that a portion of the disk medium protrudes from the disk mounting recess, and wherein ribs for preventing fall-in of the disk medium are formed to protrude toward an inner side of the disk medium from inner surfaces of both side walls of the frame at an area positioned deeper toward the sliding direction of the disk tray than a center of the disk medium when the disk tray is loaded in the disk device, the ribs being formed so that the distance between the ends of the ribs is smaller than at least the outer diameter of the disk medium, and so that they do not contact the disk medium when the disk medium is clamped by the clamp mechanism.

4. The disk device having ribs for preventing fall-in of the disk medium according to claim 3, wherein the ribs for preventing fall-in of the disk medium are formed at an area near the portion of the disk medium protruded from the disk mounting recess when the disk medium is clamped by the clamp mechanism, and with respect to the height-direction size of the disk device, the ribs for preventing fall-in of the disk medium are formed so that lower ends of the ribs are positioned substantially equal to or lower than a lower surface of the disk medium mounted on the disk mounting recess, and the upper ends of the ribs for preventing fall-in of the disk medium are positioned substantially equal to the upper end portion of the side walls of the frame.

5. The disk device having ribs for preventing fall-in of the disk medium according to any one of claims 1 through 4, wherein the ribs for preventing fall-in of the disk medium are formed so that the upper ends thereof are placed deeper toward the depth direction of the disk device than the lower ends thereof, so that the ribs are slanted with respect to the vertical direction of the disk device.

6. The disk device having ribs for preventing fall-in of the disk medium according to any one of claims 1 through 5, wherein the ribs for preventing fall-in of the disk medium are formed integrally with guide ribs formed on the inner surfaces of both side walls of the frame for restricting the sliding direction of the disk tray.
